Europäisches Patentamt

European Patent Office

Office européen des brevets

(19)

(11) Veröffentlichungsnummer: **0 019 135**
**B1**

(12) **EUROPÄISCHE PATENTSCHRIFT**

(45) Veröffentlichungstag der Patentschrift: **18.01.84**

(21) Anmeldenummer: **80102295.5**

(22) Anmeldetag: **28.04.80**

(51) Int. Cl.³: **G 01 F 1/68,** G 01 K 13/02, G 01 K 7/18

(54) Messonde zur Verwendung bei der Messung der Temperatur oder Masse eines strömenden Mediums und Verfahren zu ihrer Herstellung.

(30) Priorität: **15.05.79 DE 2919433**

(43) Veröffentlichungstag der Anmeldung:
**26.11.80 Patentblatt 80/24**

(45) Bekanntmachung des Hinweises auf die Patenterteilung:
**18.01.84 Patentblatt 84/3**

(84) Benannte Vertragsstaaten:
**CH DE FR GB IT LI NL SE**

(56) Entgegenhaltungen:
**DE - A - 1 904 029**
**DE - A - 2 029 065**
**DE - A - 2 302 615**
**DE - A - 2 408 246**
**DE - B - 1 270 864**
**US - A - 3 201 736**
**US - A - 3 748 174**
**US - A - 3 991 613**
**US - A - 3 996 799**
**US - A - 4 160 969**

(73) Patentinhaber: **ROBERT BOSCH GMBH**
**Postfach 50**
**D-7000 Stuttgart 1 (DE)**

(72) Erfinder: **Gruner, Heiko, Dr., Dipl.-Phys.**
**Nanneteweg 30**
**D-7016 Gerlingen (DE)**
Erfinder: **Friedrich, Heinz**
**Sombartstrasse 37**
**D-7000 Stuttgart 80 (DE)**

Courier Press, Leamington Spa, England.

**Meßonde zur Verwendung bei der Messung der Temperatur oder Masse eines strömenden Mediums und Verfahren zu ihrer Herstellung**

Stand der Technik

Die Erfindung geht aus von einer Meßsonde nach der Gattung des Hauptanspruches. Eine derartige Meßsonde ist aus der DE—AS 2 302 615 bekannt. In dieser Druckschrift ist ein temperaturabhängiger elektrischer Widerstand für eine Meßsonde beschrieben, welcher eine vorzugsweise aus Gold bestehende Beschichtung als temperaturabhängigen Meßwiderstand besitzt. Die Form des Widerstandes ist durch Maskenbedampfung auf einer dünnen Folie hergestellt. Da Gold als Schichtwiderstand relativ korrosionsbeständig ist wurde bei dieser bekannten Meßsonde keine Schutzabdeckung vorgesehen. Die Korrosionsbeständigkeit der bekannten Meßsonde ist daher verhältnismäßig gering und der Meßwiderstand ist auch in erheblichem Maße der Gefahr mechanischer Beschädigungen ausgesetzt. Über die Gestaltung von Leiterbahnen zwischen dem Meßwiderstand und den Anschlußkontaktstellen sowie über die Zugänglichkeit der Anschlußkontaktstellen macht diese Druckschrift keine Aussagen.

Weiterhin ist es aus der US—A 3 748 174 bekannt, aufeiner Trägerfolie aus Polyimid eine dünne Nickelschicht als Temperatursensor auszubilden, welche als Korrosionsschutzschicht und mechanische Schutzschicht einen Polyimid-Film als Deckschicht trägt. Der Nickel-Meßwiderstand ist also beidseitig von einem Kunststoffilm abgedeckt. Über die Gestaltung einer Meßsonde mit dem beschriebenen Widerstand enthält diese Druckschrift keine Angaben. Schließlich ist es aus der US—A 3 201 736 bekannt, einen temperaturabhängigen Widerstand, welcher zwischen zwei Kunststoff-Deckschichten eingebettet ist, zusätzlich auf beiden Seiten durch luft- und dampfdichte Beschichtungen zu schützen. Eine hydrophobe organische Schutzschicht und Verfahren zur Polymerisation der Schutzschicht, beispielsweise mit Hexamethyldisiloxan als Ausgangspolymer, ist aus der DE—A 26 25 448 bekannt.

Eine Meßsonde mit einem ungeschützten, freiliegenden temperaturabhängigen Widerstand, welcher in direktem Kontakt zum strömenden Medium steht, hat neben der Störanfälligkeit gegen mechanische und korrosive Angriffe den Nachteil, daß zusätzliche Meßfehler hervorgerufen werden durch eine etwaige elektrische Leitfähigkeit des Mediums und/oder durch eine Änderung des Wärmeübergangswiderstandes. Bei Meßsonden mit isolierten metallischen Trägern für den temperaturabhängigen Widerstand besteht der Nachteil, daß der Träger infolge seiner nicht zu vernachlässigenden Masse eine beachtliche Wärmekapazität hat. Der Wärmestrom zwischen dem temperaturabhängigen Widerstand und dem Träger führt dann zu einer Verringerung der Ansprechgeschwindigkeit des temperaturabhängigen Meßwiderstandes bei sich ändernder strömender Mediummasse. Ziel der Erfindung muß es daher sein, eine Meßsonde zu schaffen, deren Fühler korrosiven und mechanischen Angriffen aus der Umgebung entzogen ist und andererseitz praktisch keine Ansprechverzögerung durch das Trägermaterial erfährt.

Vorteile der Erfindung

Die erfindungsgemäße Meßsonde mit den kennzeichnenden Merkmalen des Anspruches 1 hat den Vorteil, daß zwischen dem System des Widerstandsmaterials und dem Trägermaterial bei sich ändernder Mediumströmung praktisch keine Wärmeströmung mehr erfolgt, wodurch der Fühler eine sehr hohe Ansprechgeschwindigkeit auf Änderungen der Masse und/oder Temperatur der Mediumströmung aufweist. Trotzdem ist das Widerstandsmaterial durch seine allseitige Verpackung optimal gegen Einflüsse von außen geschützt. Gleichzeitig ist aber auch eine ausgezeichnete thermische Entkopplung der Meßwiderstände von der mechanischen Halterung erreicht. Schließlich ergibt sich eine besonders einfache und billige Herstellungsweise.

Durch die in den weiteren Ansprüchen aufgeführten Maßnahmen sind vorteilhafte Weiterbildungen und Verbesserungen der im Hauptanspruch angegebenen Meßsonden sowie eine güstige Verfahrensweise zu ihrer Herstellung mögliche.

Zeichnung

Einzelheiten und Merkmale der Erfindung ergeben sich aus der Zeichnung und deren nachfolgender Beschreibung, wobei in der Zeichnung ein Ausführungsbeispiel der Erfindung vereinfacht dargestellt ist. Es zeigen: Figur 1 einen Schnitt durch eine Sonde zur Messung der Temperatur oder Masse eines strömenden Mediums, Figur 2 eine Draufsicht auf eine erfindungsgemäße Meßsonde und Figur 3 eine Meßsonde nach der Erfindung in einem von einem Medium durchströmten Kanal.

Beschreibung der zeichnerischen Darstellungen

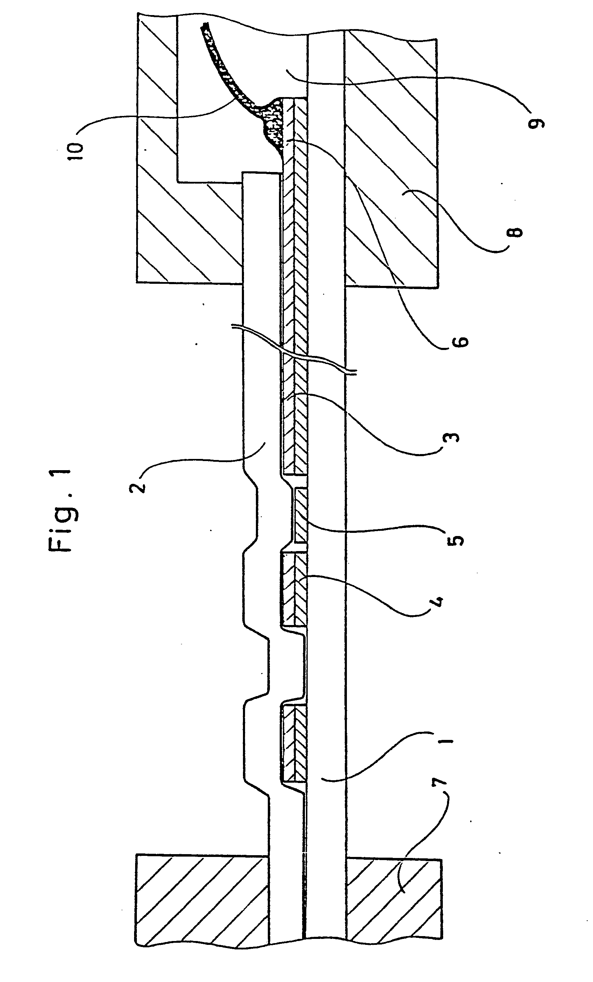

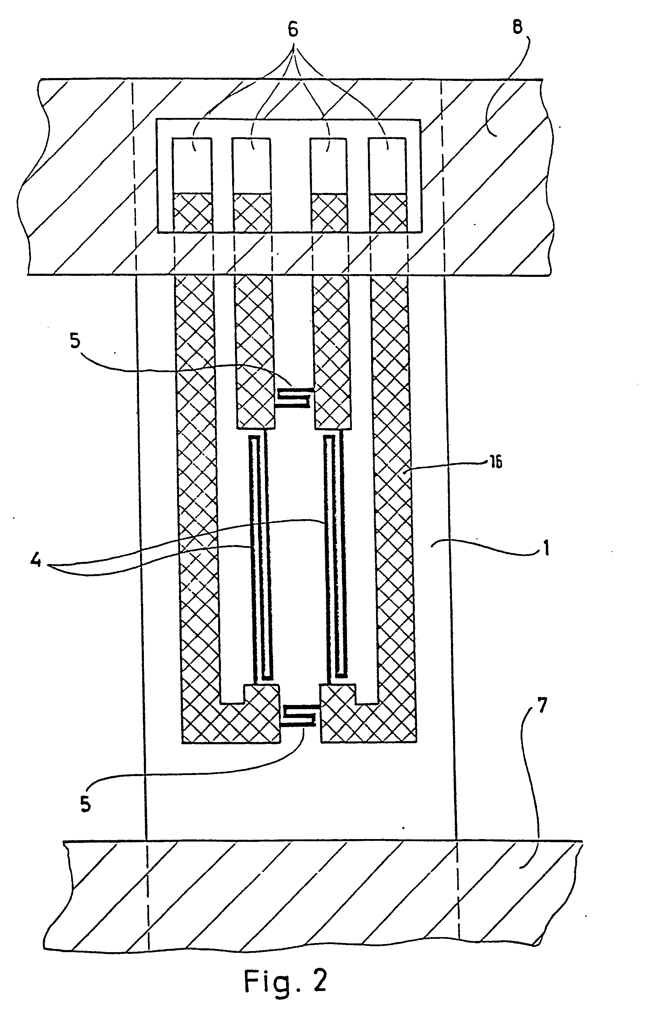

In Figur 1 und 2 sind Fühler zur Messung der Masse und/oder Temperatur eines strömenden Mediums im Schnitt und in Draufsicht dargestellt. Er besteht aus einer ersten Trägerfolie 1, beispielsweise aus Polyimid mit ein- oder beidseitiger Deckschicht aus Fluorkohlenstoffen und einer zweiten Folie 2 aus dem gleichen Material. Die Folie 1 ist ursprünglich mit einem Schichtsystem 3 aus Widerstandsmaterialien durch Vakuumbeschichtung ganzflächig metallisiert worden. Aus dieser ganzflächigen Beschichtung wird dann im Nachhinein mittels Maskenätzprozesses eine Gruppierung von temperaturabhängigen Widerständen 4, temperaturunabhängigen Widerständen 5 und Leiterbahnen 16 gebildet, wobei die temperaturunabhängige Widerstandsschicht im wesentlichen auf Tantalbasis und die temperaturabhängige Schicht im wesentlichen auf Nickelbasis aufgebaut sein können.

Sind die so im Hinblick auf den jeweiligen Anwendungsfall erforderlichen Widerstände und Leiterbahnen durch den Maskenätzprozess gebildet, kann eventuell noch ein Widerstandsabgleich dadurch erfolgen, daß man von den Widerständen 4, 5 Bestandteile durch Wegschneiden von Material, bei der temperaturunabhängien Schicht durch anodische Oxydation etc. entfernt.

Danach wird die obere Folie 2 aufgebracht und mit der Folie 1 an allen nicht von den Widerständen und Leiterbahnen eingenommenen Bereichen beispielsweise durch Schweißen und/oder durch eine chemische Reaktion dicht und fest verbunden, wobei die Kontaktanschlußstellen 6 freigelassen werden. Der so erhaltene Fühler wird mechanisch von selbsttragenden, strömungsgünstigen Halterungen 7, 8 so aufgenommen, daß eine optimale thermische Entkopplung zwischen den Meßwiderständen und der Halterung erhalten bleibt und Freiräume 9 für die Herstellung von Anschlüssen 10 belassen werden.

Dabei können die äußeren Oberflächen der Folien 1 und 2 eine hydrophobe Beschichtung mit einer dieelektrischen, korrosionsbeständigen, pin-hole-freien Schutzschicht mit Ausgangspolymeren in Form von Hexamethyldisiloxan, Hexafluorpropylen oder dergleichen bekommen, um eine Oberflächenverschmutzung und damit eine Änderung in der Ansprechgeschwindigkeit noch besser zu verhindern.

Die Dicke der Folien 1, 2 liegt je nach erforderlicher Ansprechgeschwindigkeit zwischen 12 und 100 $\mu$, während die Dicke der hydrophoben Schutzschict zweckmäßig unter 4 $\mu$m, vorzugsweise bei 0,5 $\mu$m liegt.

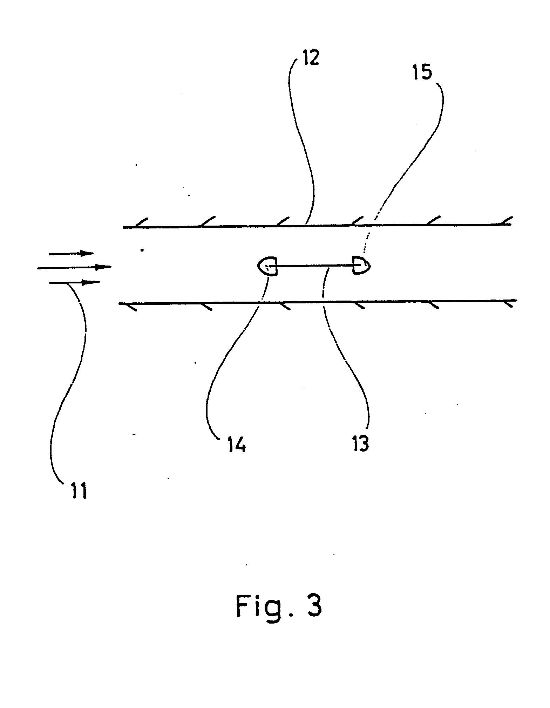

Figur 3 zeigt schematisch die Anordnung einer erfindungsgemäßen Meßsonde in einem von einem Medium 11 durchströmten Kanal 12, wobei der Fühler bestehend aus den Folien 1, 2 mit den Widerständen 4, 5 und den Leiterbahnen 16 mit 13 und die selbsttragende Halterung mit 14, 15 bezeichnet ist. Insbesondere durch Figur 3 wird die nach der Erfindung gute thermische Entkopplung zwischen Halterung und dem vorgenannten Schichtsystem ersichtlich.

Ausführungsformen der Erfindung zur Massen- und/oder Temperaturmessung können bestehen aus nur einem temperaturabhängigen Widerstand 4, je einem oder 2 temperaturabhängigen Widerständen 4 mit je einem oder zwei temperaturunabhängigen Widerständen 5 zur Halb- oder Vollbrückenschaltung ergänzt in einer Doppelfolie oder aus je einem temperaturabhängigen Widerstand 4 auf zwei getrennten Doppelfolien mit temperaturunabhängigen Widerständen 5 auf einer der beiden Doppelfolien zu einer Vollbrücke ergänzt, wodurch der Einfluß der Temperatur des strömenden Mediums auf die Massenmessung kompensiert werden kann.

Zu Figur 2 darf noch nachgetragen werden, daß die dortige Darstellung unter Fortlassung der Folie 2 gemäß Figur 1 erfolgt.

**Patentansprüche**

1. Meßsonde zur Verwendung bei der Messung der Temperatur oder Masse eines strömenden Mediums, insbesondere bei der Messung der Ansaugluftmasse und/oder Kraftstoffmasse einer Brennkraftmaschine, mit

— einer Trägerfolie (1) aus einem temperaturbeständigen Kunststoff,
— mindestens einem temperaturabhängigen Meßwiderstand (4), der eine auf die Trägerfolie aufgebrachte Metallschicht umfaßt,
— auf der Trägerfolie vorgesehenen Anschlußkontaktstellen (6),
— einer selbsttragenden Halterung (7, 8; 14, 15), in die die Trägerfolie (1) mit dem Meßwiderstand (4) so eingesetzt ist, daß das strömende Medium ungehindert Zutritt zu dem von dem Meßwiderstand eingenommenen Bereich hat, dadurch gekennzeichnet, daß
— der Meßwiderstand (4) mit den Anschlußkontaktstellen (6) über ebenfalls auf der Trägerfolie angeordnete Leiterbahnen (16) verbunden ist,
— die Metallschicht (3) im wesentlichen aus Nickel besteht und mit einer im wesentlichen aus Tantal bestehenden weiteren Schicht unterlegt ist,
— die Trägerfolie (1), eine Dicke zwischen 12 und 100 Mikrometern aufweist,
— auf der den Meßwiderstand tragenden Seite der Trägerfolie eine den Meßwiderstand überdeckende weitere temperaturbeständige Kunststoffolie (2) vorgesehen ist, welche die Anschlußkontaktstellen freiläßt und an allen nicht von dem Meßwiderstand und den Leiterbahnen bedeckten Bereichen der Trägerfolie fest und dicht mit dieser verbunden ist,
— die Anschlußkontaktstellen (6) in einem Bereich der Trägerfolie vorgesehen sind, mit dem die Trägerfolie in die Halterung (7, 8; 14, 15) eingesetzt ist, wobei die Halterung mit einer Aussparung versehen ist, über die eine Verbindung zwischen den Anschlußkontaktstellen und einer Auswerteschaltung herstellbar ist.

2. Meßsonde nach Anspruch 1, dadurch gekennzeichnet, daß auf der Trägerfolie (1) zusätzlich mindestens ein temperaturunabhängiger Widerstand (5) in Form einer Tantalschicht vorgesehen ist, welche ebenfalls von der weiteren Kunststoffolie (2) überdeckt ist, und daß der temperaturunabhängige und der temperaturabhängige Widerstand (5 bzw. 4) Teile einer Brückenschaltung sind.

3. Meßsonde nach Anspruch 1, dadurch gekennzeichnet, daß die Kunststoffolien (1, 2) Polyimidfolien sind.

4. Meßsonde nach einem der vorhergehenden Ansprüche, dadurch gekennzeichnet, daß die äußeren Oberflächen der Kunststoffolien (1, 2) eine hydrophobe Beschichtung in Form einer dielektrischen, korrosionsbeständigen, pin-holefreien Schutzschicht mit Ausgangspolymeren wie z.B. Hexamethyldisiloxan oder Hexafluorpropylen aufweisen.

5. Meßsonde nach Anspruch 4, dadurch gekennzeichnet, daß die hydrophobe Beschichtung unter 4 $\mu$m dick, vorzugsweise 0,5 $\mu$m dick ist.

6. Meßsonde nach Anspruch 4 oder 5, dadurch gekennzeichnet, daß die äußeren Oberflächen der Kunststoffolien (1, 2) mittels Glimmpolymerisatschichten hydrophobiert sind.

7. Meßsonde nach einem der vorhergehenden Ansprüche, dadurch gekennzeichnet, daß die Kunststoffolien (1, 2) an allen nicht von den Widerständen und Leiterbahnen eingenommenen Bereichen miteinander verschweißt oder chemisch verbunden sind.

8. Verfahren zur Herstellung der Widerstände und Leiterbahnen der Meßsonde nach Anspruch 2, dadurch gekennzeichnet, daß die Trägerfolie (1) auf einer Seite ganzflächig zunächst mit einer Tantalschicht und anschließend mit einer Nickelschicht metallisiert wird, und daß in diesem Schichtsystem der temperaturabhängige und der temperaturunabhängige Widerstand (4 bzw. 5) sowie die Leiterbahnen (16) mittels eines Maskenätzprozesses gebildet werden.

9. Verfahren nach Anspruch 8, dadurch gekennzeichnet, daß das Schichtsystem der Widerstandsmaterialien (3) auf die Träger-Folie (1) durch Vakuumbeschichtung, beispielsweise durch Aufstäuben, aufgebracht wird.

**Revendications**

1. Sonde de mesure applicable à la mesure de la température ou de la masse d'un fluide qui s'écoule notamment pour mesurer la masse de l'air aspiré et/ou la mass de carburant dans un moteur à combustion interne avec:

— une feuille de support (1) en une matière synthétique résistant à la température,

— ou moins une résistance de mesure (4) dépendant de la température, qui entoure une couche métallique rapportée sur une feuille de support,

— des points de contact de raccordement (6) prévus sur la feuille de support,

— un support auto-porteur (7, 8; 14, 15) dans lequel est placée la feuille de support (1) avec la résistance de mesure (4) de façon que le fluide qui s'écoule puisse accéder sans être gêné, dans la zone occupée par la résistance de mesure,

— caractérisée en ce que:

— la résistance de mesure (4) est reliée aux points de contact de raccordement (6) par des chemins conducteurs (16) également prévus sur la feuille de support,

— la couche métallique (3) est essentiellement en nickel et se trouve sous une autre couche essentiellement en tantale,

— la feuille de support (1) a une épaisseur comprise entre 12 et 100 microns,

— du côté, de la feuille de support portant la résistance de mesure, il est prévu une autre feuille de matière synthétique (2) résistant à la température et qui recouvre la résistance de mesure, feuille qui laisse dégagés les points de contact de raccordement et est reliée solidairement et étroitement à la feuille de support dans toutes les zones non occupées par la résistance de mesure et les chemins conducteurs,

— les points de contact de raccordement (6) sont prévus dans une zone de la feuille de support par laquelle la feuille de support est placée dans le support (7, 8; 14, 15), le support étant muni d'une découpe qui est susceptible de réaliser une liaison entre les points de contact de raccordement et un circuit d'exploitation.

2. Sonde de mesure selon la revendication 1, caractérisée en ce que sur la feuille de support (1), il est prévu en plus au moins une résistance (5) dépendant de la température sous la forme d'une couche de tantale, qui est également recouverte par l'autre feuille de matière synthétique (2) et en ce que la résistance (5 ou 4) indépendante de la température et dépendante de la température fait partie d'un montage en pont.

3. Sonde de mesure selon la revendication 1, caractérisée en ce que les feuilles de matière synthétique (1, 2) sont des feuilles de polyimide.

4. Sonde de mesure selon l'une des revendications précédentes, caractérisée en ce que la surface supérieure extérieure des feuilles de matière synthétique (1, 2) a un revêtement hydrophobe sous la forme d'une couche de protection diélectrique, résistant à la corrosion, sans trous d'épingle, réalisée à partir de polymères tels que l'héxaméthyldisiloxane ou l'héxafluoropropylène.

5. Sonde de mesure selon la revendication 4, caractérisée en ce que la couche hydrophobe a une épaisseur inférieure à 4 microns de préférence 0,5 micron.

6. Sonde de mesure selon la revendication 4 ou 5, caractérisée en ce que la surface extérieure supérieure des feuilles de matière synthétique (1, 2) est rendue hydrophobe par des couches d'un polymérisat à effet corona.

7. Sonde de mesure selon l'une des revendications précédentes, caractérisée en ce que les feuilles de matière synthétique (1, 2) sont soudées ou reliées chimiquement l'une à l'autre dans toutes les zones non occupées par les résistances et les chemins conducteurs.

8. Procédé de réalisation des résistances et chemins conducteurs de la sonde de mesure selon la revendication 2, caractérisé en ce que la feuille de support (1) est métallisée sur toute une face tout d'abord avec une couche de tantale, puis avec une couche de nickel et en ce que dans ce système de couches, on forme les résistances (4, 5) dépendante de la température et indépendante de la température ainsi que les chemins conducteurs (16) par un procédé d'attaque chimique avec masque.

9. Procédé selon la revendication 8, caractérisé en ce que le système de couches des matières de résistance (3) est réalisé sur la feuille de support (1) par un revêtement sous vide par exemple par pulvérisation.

**Claims**

1. A measuring probe for use in measuring the temperature or mass of a flowing medium, particularly in the measurement of a mass of intake air and/or mass of fuel in a combustion engine, comprising

— a carrier foil (1) of temperature resistant plastics material,
— at least one temperature dependent measuring resistor (4) which comprises a metal layer applied to the carrier foil,
— contact terminal locations (6) provided on the carrier foil,
— a self-supporting mounting (7, 8; 14, 15) into which the carrier foil (1) together with the measuring resistor (4) is so inserted that the flowing medium has unimpeded admission to the region occupied by the measuring resistor,

characterised in that,

— the measuring resistor (4) is connected to the contact terminal locations (6) by conductor strips (16) likewise arranged on the carrier foil,
— the metal layer (3) consists essentially of nickel and has a further layer consisting essentially of tantalum beneath it,
— the carrier foil (1) has a thickness between 12 and 100 micrometres,
— a further temperature resistant plastics foil (2) covering the measuring resistor is provided on the side of the carrier foil carrying the measuring resistor leaving the contact terminal locations free and at all regions of the carrier foil not covered by the measuring resistor and the conductor strips is rigidly and tightly connected to the carrier foil,
— the contact terminal locations (6) are provided in a region of the carrier foil by which the carrier foil is inserted in the mounting (7, 8; 14, 15) wherein the mounting is provided with a recess through which a connection between the contact terminal locations and an evaluating circuit can be produced.

2. A measuring probe according to claim 1, characterised in that, at least one additional resistor (5) not dependent on temperature is provided on the carrier foil (1) in the form of a tantalum layer which is likewise covered by the further plastics foil (2) and that the resistor not dependent on temperature and the temperature dependent resistor (5 and 4) are parts of a bridge circuit.

3. A measuring probe according to claim 1, characterised in that, the plastics foils (1, 2) are polyimide foils.

4. A measuring probe according to one of the preceding claims, characterised in that, the external surfaces of the plastics foils (1, 2) have an hydrophobic coating in the form of a dielectric, corrosion resistant, pin-hole-free protective layer with basic polymers such as for example hexamethyldisiloxane or hexafluoropropylene.

5. A measuring probe according to claim 4, characterised in that, the hydrophobic coating is less than 4 $\mu$m thick, preferably 0.5 $\mu$m thick.

6. A measuring probe according to claim 4 or 5, characterised in that, the external surfaces of the plastics foils (1, 2) are rendered hydrophobic by means of mica polymer coatings.

7. A measuring probe according to one of the preceding claims, characterised in that, the plastics foils (1, 2) are welded to one another or are chemically bonded in all regions not occupied by the resistors and the conductor strips.

8. A method for producing the resistors and conductor strips of the measuring probe according to claim 2, characterised in that, the carrier foil (1) is first of all metallised with a tantalum layer and then with a nickel layer over the whole area of one side and that the temperature dependent resistor and the resistor not dependent on temperature (4 and 5) as well as the conductor strips (16) are formed within the said layer system by means of a masking etching process.

9. A method according to claim 8, characterised in that, the layer system of the resistor materials (3) is applied to the carrier foil (1) by vacuum coating, for example by spraying.

# Fig. 1

0 019 135

Fig. 2

Fig. 3